# FASCICULE DE BREVET EUROPEEN

(11) **EP 3 685 528 B1**
(45) Date de publication et mention de la délivrance du brevet: **04.11.2020**
(21) Numéro de dépôt: 18833090.6
(22) Date de dépôt: 07.12.2018
(51) Int. Cl.: H04B 10/118

(54) **TRANSMISSION FURTIVE ENTRE UNE SOURCE À BORD D'UN SATELLITE OU AÉRONEF ET UN RÉCEPTEUR ÉLOIGNÉ**
STEALTH-ÜBERTRAGUNG ZWISCHEN EINER QUELLE AN BORD EINES SATELLITEN ODER EINES FLUGZEUGS UND EINEM ENTFERNTEN EMPFÄNGER
STEALTH TRANSMISSION BETWEEN A SOURCE ON BOARD A SATELLITE OR AN AIRCRAFT AND A REMOTE RECEIVER

(30) Priorité: 19.12.2017 FR 1701319
(43) Date de publication de la demande: 29.07.2020
(73) Titulaire: Airbus Defence and Space SAS, 31402 Toulouse Cedex 4 (FR)
(72) Inventeur: BERCEAU, Paul, 31402 TOULOUSE Cedex 4 (FR); PLANCHE, Gilles, 31402 TOULOUSE Cedex 4 (FR)
(74) Mandataire: Plasseraud IP
(86) Numéro de dépôt international: PCT/FR2018/053154
(87) Numéro de publication internationale: WO 2019/122576

(56) Documents cités:
- US-B1- 7 925 167
- US-B2- 8 588 617
- US-B2- 9 407 363

## Description

La présente invention concerne un procédé de transmission furtive à partir d'une source de données qui est à bord d'un satellite ou d'un aéronef, à destination d'un récepteur qui est situé dans une zone géographique éloignée de ce satellite ou aéronef.

La communication par modulation d'intensité d'un faisceau laser qui se propage en champ libre, aussi appelée communication optique en champ libre, est déjà utilisée pour transmettre des données entre un émetteur et un récepteur qui sont éloignés ou très éloignés l'un de l'autre. En particulier, elle permet de transmettre des données entre une source des données qui est à bord d'un satellite ou d'un aéronef, et un récepteur qui est situé sur Terre au niveau du sol. Les débits de transmission de données qui sont réalisables par ce mode de communication peuvent être très élevés, notamment de l'ordre de 1 Gbit/s (Gigabit par seconde). La fréquence de modulation du faisceau laser, très élevée, qui est nécessaire pour obtenir un tel débit de transmission, limite dans la pratique la puissance du faisceau laser à des valeurs qui sont faibles. Alors, afin qu'une puissance de rayonnement suffisante pénètre dans le récepteur, le faisceau laser doit posséder une divergence qui est faible. A cause de cela, des procédures dites de ralliement et d'acquisition sont nécessaires avant que les données soient transmises par l'émetteur au récepteur, afin d'orienter la direction d'émission de l'émetteur vers le récepteur, et la direction de réception du récepteur vers l'émetteur. De telles procédures de ralliement et d'acquisition sont largement décrites dans la littérature du domaine technique des communications optiques en champ libre, si bien qu'il n'est pas nécessaire de les décrire à nouveau ici. On rappelle seulement les contraintes suivantes du mode de communication optique en champ libre :
/i/ les procédures de ralliement et d'acquisition nécessitent de connaître la position du récepteur préalablement, c'est-à-dire avant d'initier une nouvelle session de communication, cette connaissance devant être transmise à l'émetteur ou disponible au sein de celui-ci ;
/ii/ deux unités laser sont nécessaires au sein de l'émetteur: une première unité qui est capable de produire un faisceau laser à haute puissance, et qui est utile pour les procédures de ralliement et d'acquisition, et une seconde unité qui est compatible avec une fréquence de modulation très élevée, et qui est utilisée pour transmettre les données ; et
/iii/ deux capteurs optiques sont nécessaires au sein du récepteur : un premier capteur de type matriciel ou de type capteur à quatre quadrants qui est utile pour les procédures de ralliement et d'acquisition, et un second capteur à un seul ou quelques éléments photosensibles, par exemple du type photodiodes, qui est utilisé pour détecter la modulation d'intensité du rayonnement reçu. Le second capteur est compatible avec le débit élevé de transmission de données.

Le faisceau laser qui est utilisé pour les procédures de ralliement et d'acquisition est couramment appelé faisceau de balise. Sa puissance est de l'ordre de plusieurs dizaines de watts et sa divergence angulaire est de l'ordre de plusieurs centaines de microradians. Mais il ne peut pas être modulé en intensité à une fréquence supérieure à 1 kHz (kilohertz), pour des raisons technologiques. Par comparaison, le faisceau laser qui est utilisé pour transmettre les données possède une puissance inférieure à 10W, une divergence inférieure à 10 µrad, mais est modulé en intensité à une fréquence qui est supérieure à 0,5 GHz (gigahertz).

La contrainte /i/ qui a été mentionnée précédemment pour les communications optiques en champ libre est particulièrement gênante pour des applications militaires, notamment lorsqu'il s'agit de transmettre des données à un commando avancé en territoire hostile. En effet, l'adversaire peut intercepter les coordonnées de position du récepteur, c'est-à-dire celles du commando, lorsque ces coordonnées sont transmises à l'émetteur pour effectuer la procédure de ralliement, ou bien il peut les intercepter au niveau du satellite ou de l'aéronef à bord duquel se trouve l'émetteur, afin d'entreprendre des mesures contre le commando.

En outre, à cause des contraintes /ii/ et /iii/, l'émetteur et le récepteur ont des prix de revient qui sont élevés. Or un prix de revient élevé est particulièrement pénalisant pour le récepteur, dont des unités séparées peuvent être destinées à équiper de nombreux véhicules, ou être disponibles en format portatif pour de nombreux équipements individuels. US 9,407,363 concerne un terminal de communication par signaux laser qui est adapté pour réaliser des phases de ralliement et d'acquisition, ces phases comprenant un balayage d'une zone géographique par le faisceau d'émission.

A partir de cet état de la technique existante, la présente invention a pour but de proposer un nouveau procédé de transmission du type communication optique en champ libre, pour lequel l'une au moins des contraintes /i/ à /iii/ est supprimée ou réduite.

Pour cela, un premier aspect de l'invention propose un procédé de transmission furtive de données à partir d'un satellite ou d'un aéronef, à destination d'un récepteur qui est situé dans une zone géographique éloignée du satellite ou aéronef. Ce procédé de l'invention comprend les étapes suivantes qui sont réalisées à bord du satellite ou aéronef :
- encoder les données sous forme d'une séquence de modulation d'intensité qui est destinée à être appliquée à un faisceau laser ; et
- appliquer répétitivement la séquence de modulation d'intensité à un faisceau laser qui est produit à partir du satellite ou aéronef et qui est dirigé à l'intérieur de la zone géographique, en même temps qu'une direction du faisceau laser est variée pour produire un balayage automatique de toute la zone géographique par le faisceau laser.

Le balayage de la zone géographique est réalisé en utilisant une vitesse de balayage et une ouverture angulaire du faisceau laser telles qu'un point quelconque de la zone géographique soit éclairé par le faisceau laser lors du balayage pendant une durée totale d'éclairement qui est supérieure à une durée de la séquence de modulation d'intensité.

En outre, le procédé de l'invention comprend les étapes suivantes qui sont réalisées par le récepteur :
- sur un capteur d'image matriciel faisant partie du récepteur, recevoir le faisceau laser pendant une durée totale de détection qui est supérieure à la durée de la séquence de modulation d'intensité, et détecter en temps réel la séquence de modulation d'intensité ; et
- décoder la séquence de modulation d'intensité de façon à récupérer les données.

Un tel procédé de transmission de données est donc du type communication optique en champ libre.

Les données sont reçues par le récepteur pendant que l'émetteur réalise le balayage de la zone géographique, à un ou plusieurs moments de ce balayage qui ne sont pas connus a priori. Il n'est donc pas nécessaire que la position du récepteur soit connue par l'émetteur, ni préalablement à la transmission des données, ni pendant ni après cette transmission, ni que le récepteur effectue une émission de signaux qui risquerait de révéler sa position. Par conséquent, le procédé de l'invention permet de maintenir secrète la position du récepteur, ce qui peut être capital pour des applications militaires, notamment pour envoyer des instructions ou des renseignements à un commando qui se trouve en position avancée dans un territoire hostile. Pour cette raison, le procédé de l'invention est dit procédé de transmission furtive.

En outre, grâce au fait que le faisceau laser est détecté en utilisant un capteur d'image matriciel, et qu'un tel capteur d'image possède une grande surface de détection, il est possible pour le récepteur de détecter le faisceau laser même si la ligne de visée de ce récepteur n'est pas orientée précisément vers l'émetteur. Ainsi, les données peuvent être transmises et reçues avec succès sans que des procédures de ralliement et d'acquisition aient été effectuées préalablement. Il n'est pas non plus nécessaire d'asservir les orientations respectives de l'émetteur et du récepteur en fonction de leurs positions réciproques en utilisant un procédé à rétroaction, pendant que les données sont transmises. Pour ces raisons, une transmission de données qui est effectuée en utilisant un procédé conforme à l'invention est particulièrement simple.

De plus, la caractéristique selon laquelle la durée totale d'éclairement du récepteur par le faisceau laser et la durée totale de détection sont supérieures à la durée de la séquence de modulation d'intensité, assure que le récepteur détecte l'intégralité de la séquence de modulation d'intensité, ou au moins une partie importante de celles-ci, et donc que le destinataire des données reçoive l'intégralité ou une grande partie de celles-ci.

De façon générale pour mettre en oeuvre l'invention, l'ouverture angulaire du faisceau laser peut être supérieure à 50 µrad, de préférence supérieure à 300 µrad, et inférieure à 2 mrad (milliradian), et la puissance du faisceau laser, intégrée sur toute une section de celui-ci, peut être supérieure à 20 W, de préférence supérieure à 50 W. Ces caractéristiques de faisceau laser correspondent à celles d'un faisceau de balise qui est utilisé pour les procédures de ralliement et d'acquisition dans les systèmes de l'art antérieur. Ainsi, l'unité laser qui est nécessaire à bord du satellite ou de l'aéronef pour mettre en oeuvre le procédé de transmission furtive de l'invention peut être d'un des modèles déjà disponibles, sans nécessiter de nouveaux développements coûteux.

La modulation d'intensité du faisceau laser peut posséder une fréquence de modulation qui est inférieure à 100 kHz, de préférence inférieure à 30 kHz, et supérieure à 1 kHz. Un tel intervalle pour la fréquence de modulation est compatible avec l'utilisation d'un capteur d'image matriciel dans le récepteur pour détecter en temps réel la séquence de modulation d'intensité. Elle est en outre suffisante pour transmettre des instructions ou des renseignements dans de nombreuses situations.

Le faisceau laser peut posséder une longueur d'onde qui est égale à 1,55 µm (micromètre). Alternativement, sa longueur d'onde peut être égale à 10,6 µm, permettant alors de transmettre les données à travers une couverture nuageuse qui peut être présente sur le trajet du faisceau laser entre l'émetteur et le récepteur.

En fonction des applications de l'invention qui sont envisagées, le récepteur peut être embarqué à bord d'un véhicule terrestre, d'un engin agricole, notamment d'un engin agricole mobile tel qu'un tracteur, d'un hélicoptère, d'un drone ou d'un bateau. Alternativement, il peut être incorporé dans une unité de communication portative, notamment pour faire partie de l'équipement individuel d'un soldat.

De préférence, les données peuvent être regroupées et encodées en paquets séparés qui sont transmis successivement sous la forme de la modulation du faisceau laser. Une telle utilisation de paquets permet de transmettre une quantité supérieure de données, et est mieux compatible avec une réception qui peut être divisée en plusieurs durées séparées au cours du balayage.

Un deuxième aspect de l'invention propose un récepteur de données qui comprend, de façon à former une voie de réception de ce récepteur de données :
- une optique, adaptée pour focaliser un rayonnement externe dans un plan focal ;
- un capteur d'image matriciel, qui est disposé dans le plan focal ;
- un contrôleur, qui est couplé au capteur d'image matriciel, de façon à former un ensemble de détection capable de détecter en temps réel une modulation d'intensité du rayonnement externe ; et
- une chaîne de décodage, qui est adaptée pour récupérer des données encodées sous la forme d'une modulation d'intensité de rayonnement.

Selon l'invention, la chaîne de décodage est agencée pour recevoir en entrée un signal de détection de modulation d'intensité qui est produit par l'ensemble de détection d'après le rayonnement externe focalisé sur le capteur d'image matriciel. Ainsi, un récepteur qui est conforme à l'invention comprend l'association en série du capteur d'image matriciel avec son contrôleur et de la chaîne de décodage.

Un tel récepteur peut être particulièrement simple, léger, peu onéreux et peu consommateur d'énergie, notamment parce que sa fonction peut être limitée à une réception passive de données sans asservissement de sa direction de réception. En outre, il ne possède qu'une seule voie de détection du rayonnement reçu, par opposition à des récepteurs qui possèdent une première voie de détection à capteur matriciel, et une seconde voie de détection avec un capteur qui est compatible avec des fréquences de modulation très élevées.

Un récepteur qui est conforme à l'invention peut être compatible avec les valeurs qui ont été citées précédemment pour la fréquence de modulation et pour la longueur d'onde du faisceau laser qui constitue le rayonnement externe détecté. En outre, il peut être adapté pour être embarqué à bord d'un véhicule terrestre, d'un engin agricole, notamment d'un engin agricole mobile tel qu'un tracteur, d'un hélicoptère, d'un drone ou d'un bateau, ou pour être incorporé dans une unité de communication portative, notamment une telle unité faisant partie de l'équipement individuel d'un soldat.

Possiblement, pour permettre de détecter plus facilement la modulation d'intensité lorsque la fréquence de cette modulation est élevée, le contrôleur du capteur d'image matriciel peut être adapté pour déterminer une zone restreinte à l'intérieur d'une surface photosensible du capteur d'image matriciel, dans laquelle zone restreinte est reçue une partie au moins du rayonnement externe pendant une première durée de détection. Le contrôleur est alors adapté en outre pour restreindre pendant une seconde durée de détection qui suit la première durée de détection, une exécution d'opérations de lecture sélectivement à des pixels de la zone restreinte, ou à ceux d'une zone de continuation de détection à l'intérieur de la surface photosensible du capteur d'image matriciel, qui résulte d'un déplacement de la zone restreinte.

Un troisième aspect de l'invention propose un émetteur de données qui est adapté pour être embarqué à bord d'un satellite ou d'un aéronef, et qui comprend :
- une unité laser, adaptée pour produire un faisceau laser ;
- une optique, disposée pour transmettre le faisceau laser vers un récepteur éloigné de l'émetteur ;
- des moyens d'orientation, qui sont adaptés pour orienter de façon variable la direction du faisceau laser à l'intérieur d'une zone géographique ;
- des moyens d'encodage, qui sont adaptés pour encoder des données sous forme d'une séquence de modulation d'intensité destinée à être appliquée au faisceau laser ; et
- des moyens de modulation, qui sont adaptés pour appliquer répétitivement la séquence de modulation d'intensité au faisceau laser en même temps que la direction du faisceau laser est variée par les moyens d'orientation.

Selon l'invention, les moyens d'orientation sont adaptés pour produire un balayage automatique de toute la zone géographique par le faisceau laser avec une vitesse de balayage, et l'optique est adaptée pour produire le faisceau laser avec une ouverture angulaire, la vitesse de balayage et l'ouverture angulaire étant adaptées de sorte qu'un point quelconque de la zone géographique soit éclairé par le faisceau laser lors du balayage pendant une durée totale d'éclairement qui est supérieure à une durée de la séquence de modulation d'intensité.

Un tel émetteur peut être particulièrement plus simple, plus léger et moins onéreux, notamment parce que sa fonction peut être limitée à une émission de données sans asservissement de sa direction d'émission par rapport au récepteur des données. En outre, il ne possède qu'une seule unité d'émission laser, par opposition à des émetteurs qui possèdent une première unité d'émission laser qui est dédiée aux procédures de ralliement et d'acquisition, et une seconde unité d'émission laser qui est compatible avec des fréquences de modulation très élevées.

Un émetteur qui est conforme à l'invention peut être compatible avec les valeurs qui ont été citées en relation avec le premier aspect de l'invention pour l'ouverture angulaire du faisceau laser, la puissance du faisceau laser, sa longueur d'onde et la fréquence de modulation.

Selon un perfectionnement optionnel de l'invention, le récepteur peut produire des signaux de réponse à destination de l'émetteur, notamment pour transmettre un accuser réception ou des informations. Pour cela, le procédé de l'invention peut comprendre en outre les étapes suivantes qui sont réalisées par le récepteur :
- déterminer une direction de réception en fonction d'un endroit sur le capteur d'image matriciel auquel a été focalisé le faisceau laser ; et
- produire un faisceau laser de réponse et transmettre des données de réponse sous forme d'une modulation du faisceau laser de réponse, tout en dirigeant ce faisceau laser de réponse conformément à la direction de réception déterminée.

Les données de réponse sont ainsi aussi transmises par communication optique en champ libre.

Le procédé comprend alors en outre l'étape suivante qui est réalisée à bord du satellite ou aéronef :
- recevoir le faisceau laser de réponse et détecter la modulation de ce faisceau laser de réponse afin de récupérer les données de réponse.

Pour un tel perfectionnement optionnel, le récepteur de données peut comprendre en outre :
- une unité d'analyse, qui est adaptée pour déterminer une direction de réception en fonction d'un endroit sur le capteur d'image matriciel auquel est focalisé le rayonnement externe ; et
- une voie d'émission, qui est adaptée pour produire un faisceau laser de réponse et pour transmettre des données de réponse sous forme d'une modulation du faisceau laser de réponse, pendant que ce faisceau laser de réponse est dirigé conformément à la direction de réception déterminée par l'unité d'analyse.

Eventuellement, et notamment si les voies de réception et d'émission du récepteur de données ont en commun un ou plusieurs composants optiques, tels qu'au moins un miroir primaire de collecte du rayonnement externe, alors le récepteur de données peut encore comprendre en outre :
- une unité de séparation entre les voies de réception et d'émission, qui est disposée pour transmettre le rayonnement externe, en provenance d'une partie au moins de l'optique du récepteur de données qui est commune aux voies de réception et d'émission, vers le capteur d'image matriciel, et pour transmettre le faisceau laser de réponse modulé vers la partie de l'optique du récepteur de données qui est commune aux voies de réception et d'émission.

Simultanément, l'émetteur de données peut comprendre en outre une voie de réception qui est adaptée pour recevoir le faisceau laser de réponse, détecter une modulation de ce dernier et décoder cette modulation afin de récupérer des données de réponse.

D'autres particularités et avantages de la présente invention apparaîtront dans la description ci-après d'exemples de mise en œuvre non limitatifs, en référence aux dessins annexés, dans lesquels :
- la figure 1 illustre une situation de transmission de données pour laquelle l'invention peut être utilisée avantageusement ;
- la figure 2 est un diagramme bloc des principaux modules d'un récepteur de données conforme à l'invention ;
- la figure 3 est un diagramme bloc des principaux modules d'un émetteur de données conforme à l'invention ; et
- la figure 4 est un agrandissement d'une partie de la figure 1, et montre trois possibilités de répartition temporelle d'une réception de données, lorsqu'un procédé de transmission conforme à l'invention est utilisé.

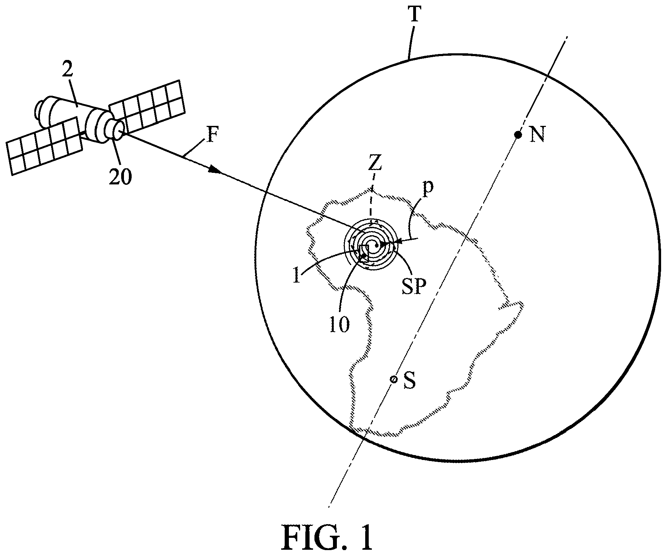

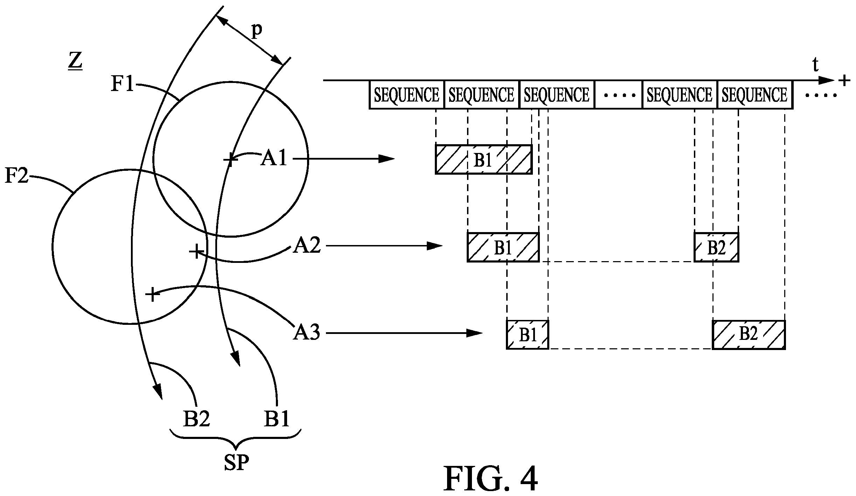

Pour raison de clarté, les dimensions des éléments qui sont représentés dans les figures 1 et 4 ne correspondent ni à des dimensions réelles ni à des rapports de dimensions réels. En outre, des références identiques qui sont indiquées dans des figures différentes désignent des éléments identiques ou qui ont des fonctions identiques.

Conformément à la figure 1, des données sont à transmettre à partir d'un satellite 2 à un destinataire 1 qui se trouve sur la Terre, au sol, à la surface de la mer ou éventuellement en altitude au-dessus du sol. Les références T, N et S désignent respectivement la Terre, son pôle nord et son pôle sud. De façon préférée mais non limitative, le satellite 2 peut être géostationnaire. Un émetteur de données 20 est embarqué à bord du satellite 2, et le destinataire 1 est muni d'un récepteur de données 10. La position du récepteur de données 10 n'est pas connue, mais une zone géographique Z dans laquelle il se trouve est connue ou disponible pour l'émetteur 20. Une telle situation pour transmettre des données à un destinataire sans que la position de ce dernier soit connue, peut apparaître lors d'opérations militaires. Tel est le cas notamment lorsque le destinataire est un commando qui se déplace de façon autonome et secrète en territoire adverse, ou lorsqu'il est nécessaire d'éviter que la transmission des données révèle la position de leur destinataire à un adversaire. Par exemple, le récepteur de données 10 peut être embarqué sur un véhicule terrestre tout-terrain, ou faire partie d'un équipement militaire individuel.

Les données sont destinées à être transmises par l'émetteur 20 au récepteur 10 selon un mode de communication optique en champ libre. Pour cela, un faisceau laser F est produit par l'émetteur 20, les données sont encodées sous forme d'une modulation d'intensité qui est appliquée au faisceau laser F par l'émetteur 20, puis le faisceau laser F modulé est détecté par le récepteur 10 pendant une durée qui est suffisante pour recevoir toutes les données. La spirale SP et le pas de spirale p qui apparaissent dans la figure 1 seront décrits plus loin en détail en référence à la figure 4.

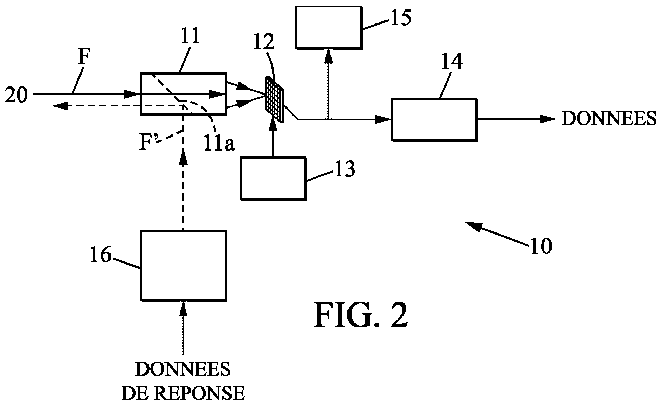

Conformément à la figure 2, le récepteur de données 10 incorpore une voie de réception qui comprend, en énumérant les composants dans le sens de la réception et du traitement des signaux : une optique 11, qui focalise un rayonnement dans un plan focal, un capteur d'image 12 qui est disposé dans ce plan focal, un contrôleur 13 qui est adapté pour piloter un fonctionnement du capteur d'image 12, et une chaîne de décodage des signaux qui est désignée par la référence 14.

L'optique 11 peut être une lunette ou un télescope d'un modèle de petite taille connu de l'Homme du métier, par exemple avec un diamètre de miroir primaire de l'ordre d'une dizaine de centimètres.

Le capteur d'image 12 est du type capteur matriciel, dont la surface photosensible peut être composée par exemple de 1024 x 1024 pixels. De façon connue, un tel capteur comprend plusieurs colonnes juxtaposées et plusieurs lignes juxtaposées, et chaque pixel est situé à l'intersection d'une des colonnes et d'une des lignes. De préférence, ce capteur est adapté pour fonctionner à température ambiante, sans système de refroidissement, et chaque pixel est capable de détecter une puissance de rayonnement qui est faible, par exemple de l'ordre d'une dizaine de picowatts (pW), à travers la surface de ce pixel. Par exemple, le capteur d'image matriciel 12 peut être d'un modèle à substrat en alliage d'indium (In), de gallium (Ga) et d'arsenic (As), à photodiodes qui sont sensibles pour la longueur d'onde de 1,55 µm, à grande efficacité quantique et à bas bruit de lecture. Une telle technologie de détection est déjà très bien maîtrisée à ce jour, si bien qu'elle ne nécessite pas de nouveaux développements pour mettre en œuvre l'invention. Alternativement, le capteur d'image matriciel 12 peut être sélectionné pour être sensible à la longueur d'onde de 10,6 µm, correspondant à une fenêtre de transparence d'une couverture nuageuse au-dessus du sol de la Terre. Mais un tel capteur nécessite d'utiliser un système de refroidissement au sein du récepteur 10.

De plus, l'optique 11 et le capteur d'image matriciel 12 peuvent être sélectionnés pour présenter une ouverture angulaire pour le champ optique de détection du récepteur 10, qui est de l'ordre de quelques milliradians. Le capteur d'image matriciel 12 et le contrôleur 13 sont sélectionnés en outre pour présenter une capacité fréquentielle de détection d'une modulation d'intensité du faisceau laser F, qui est de l'ordre de quelques kilohertz (kHz) ou de quelques dizaines de kilohertz. Autrement dit, le capteur 12 et le contrôleur 13 possèdent une bande passante qui est élevée pour un capteur d'image de type matriciel. Possiblement, l'optique 11, le capteur 12 et le contrôleur 13 peuvent être de modèles qui sont utilisés actuellement au sein de terminaux de communication optique pour la voie de détection de ces terminaux qui est dédiée à la procédure d'acquisition. Mais contrairement à l'architecture de ces terminaux connus, ces modèles d'optique, de capteur et de contrôleur sont utilisés selon l'invention pour recevoir des données utiles, et non pas pour recevoir un signal de balise qui est mis en œuvre dans une procédure d'acquisition.

Possiblement, pour augmenter la bande passante de la détection de la modulation d'intensité du faisceau laser F par le capteur d'image matriciel 12, le contrôleur 13 peut être adapté pour restreindre les opérations de lecture à certains des pixels du capteur 12 dont le(les) dernier(s) signal (signaux) d'accumulation sont importants. Une telle sélection de lecture est donc limitée à des pixels sur lesquels est focalisé le faisceau laser F, et qui sont suffisants pour extraire la modulation d'intensité du faisceau laser F. D'une façon qui est connue de l'Homme du métier, une telle sélection peut utiliser des opérations de seuillage et de centrage d'une fenêtre de sélection. En outre, un déplacement progressif de la fenêtre de sélection peut être déduit de séquences de lecture et de seuillage successives, permettant de réaliser une fonction de poursuite. Un tel procédé de lecture d'une zone restreinte d'un capteur d'image matriciel est bien connu de l'Homme du métier, si bien qu'il n'est pas nécessaire de le décrire plus en détail.

La chaîne de décodage 14 peut être de l'un des modèles disponibles pour des applications de télécommunication par transmission optique. Elle est disposée pour recevoir en entrée un signal de détection de la modulation d'intensité qui est produit par le capteur 12 piloté par le contrôleur 13, et qui correspond à une modulation d'intensité d'une partie du faisceau laser F qui a été collectée par l'optique 11 et focalisée sur le capteur 12. La chaîne de décodage 14 restitue les données transmises à partir du signal de détection de la modulation d'intensité qui est délivré par l'ensemble de détection formé par le capteur 12 et le contrôleur 13.

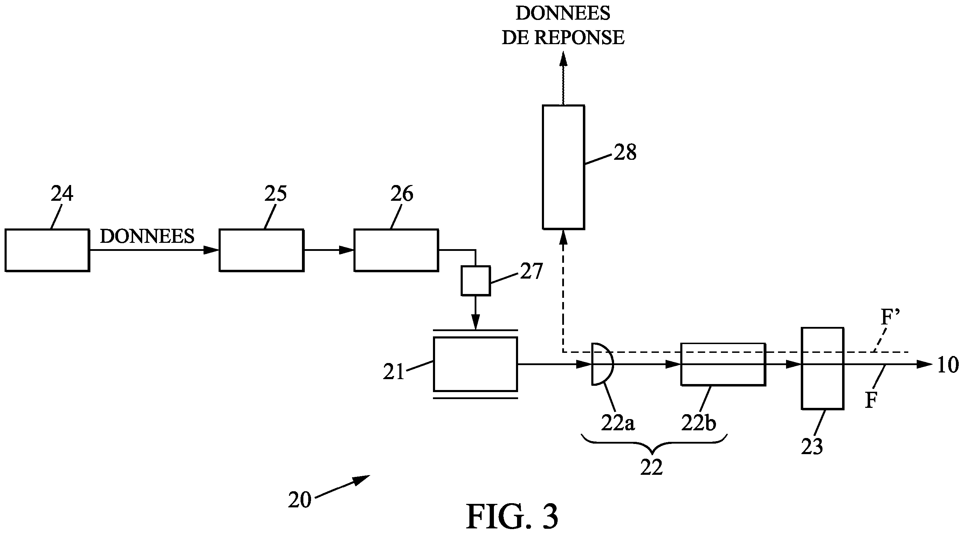

Conformément à la figure 3, l'émetteur de données 20 incorpore une voie d'émission qui comprend, en énumérant les composants dans le sens de la production et de la transmission des signaux optiques : une unité laser 21, qui est adaptée pour produire le faisceau laser F, une optique 22, qui est disposée pour transmettre le faisceau laser F vers le récepteur de données 10, et des moyens 23 d'orientation du faisceau laser F, qui sont adaptés pour diriger de façon variable le faisceau laser F à l'intérieur de la zone géographique Z. L'unité laser 21 peut comprendre des diodes de pompage à haute puissance, qui sont capables de conférer au faisceau laser F une puissance de l'ordre de plusieurs dizaines de watts. De plus, elle peut être adaptée pour produire le faisceau laser F avec une longueur d'onde de 1,55 µm ou 10,6 µm comme déjà indiqué. L'optique 22 peut être constituée par un coupleur optique 22a qui est associé avec un télescope 22b. Elle est conçue pour transmettre vers l'extérieur le faisceau laser F avec une ouverture angulaire qui peut être comprise entre 0,3 mrad et 1 mrad, par exemple. Le télescope 22b peut être d'un modèle déjà connu, avec un diamètre de miroir primaire de plusieurs dizaines de centimètres. En particulier, l'unité laser 21, l'optique 22 et les moyens d'orientation 23 peuvent être de modèles qui sont utilisés actuellement dans des terminaux de communication optique pour la voie d'émission qui est dédiée aux procédures de ralliement et d'acquisition. Mais contrairement à l'architecture de ces terminaux connus, ces modèles d'unité laser, d'optique et de moyens d'orientation sont utilisés selon l'invention pour transmettre des données utiles, et non pas pour transmettre un signal de balise qui est mis en œuvre pour les procédures de ralliement et d'acquisition.

La voie d'émission de l'émetteur 20 comprend en outre une source des données 24, des moyens d'encodage 25 pour encoder les données fournies par la source 24 sous forme d'une séquence de modulation d'intensité qui est destinée à être appliquée au faisceau laser F, et des moyens de modulation 26 pour moduler l'intensité du faisceau laser F. La source de données 24 peut générer les données à transmettre, ou bien les fournir à partir d'une origine externe au satellite 2. Selon l'invention, la sortie des moyens d'encodage 25 est connectée à une entrée de modulation de l'unité laser 21, c'est-à-dire aux diodes de pompage, par l'intermédiaire des moyens de modulation 26. Possiblement, un amplificateur 27 peut être utilisé en outre entre les moyens de modulation 26 et l'entrée de modulation des diodes de pompage. Ainsi l'émetteur 20 de l'invention est capable de transmettre des données utiles en utilisant un faisceau laser dont les caractéristiques de puissance et d'ouverture angulaire correspondent à celles d'un faisceau de balise tel qu'utilisé avant la présente invention.

Selon une caractéristique supplémentaire de l'invention, les moyens de modulation 26 appliquent répétitivement au faisceau laser F la même séquence de modulation d'intensité qui correspond à l'encodage des données à transmettre au récepteur 10. Ainsi, une émission des données est produite par l'émetteur 20, qui est répétée continuellement pendant une durée d'émission.

Selon une autre caractéristique supplémentaire de l'invention, les moyens d'orientation 23 sont adaptés pour produire un balayage automatique de toute la zone géographique Z pendant la durée d'émission, de sorte que chaque endroit dans cette zone soit éclairé au moins une fois au cours du balayage. Pour cela, le trajet de balayage de la zone Z, et notamment son pas de balayage, est ajusté en fonction de l'ouverture angulaire du faisceau laser F, d'une façon qui est accessible à l'Homme du métier sans nécessiter d'être décrite en détail ici. A titre d'exemple, les figures 1 et 4 montrent un trajet de balayage en forme de spirale SP, avec un pas p de la spirale SP qui est inférieur à un diamètre de la tache d'éclairement du faisceau laser F sur le sol terrestre. Dans le cadre de la présente invention, on entend par balayage qui est réalisé automatiquement un procédé de variation de la direction du faisceau laser F selon lequel ce faisceau est dévié de façon variable par les moyens d'orientation 23, avec une séquence de déviation qui est indépendante d'une signification des données à transmettre, et indépendante de la position du récepteur 10 à l'intérieur de la zone géographique Z, pour éclairer temporairement tous les points de cette zone Z. Toutefois, la dimension et le trajet du balayage peuvent être ajustés en fonction de la surface et de la forme de la zone géographique Z. En outre, la vitesse du balayage, ainsi qu'éventuellement aussi le pas p du balayage et/ou un nombre d'itérations du balayage, doivent être tels que la durée totale d'éclairement de n'importe quel point à l'intérieur de la zone géographique Z soit supérieure à la durée de la séquence de modulation qui correspond à l'intégralité des données à transmettre.

Dans la pratique, à cause de scintillements que peut provoquer l'atmosphère terrestre au bord de la tache d'éclairement au sol du faisceau laser F, le diamètre effectif de tache peut être avantageusement réduit par rapport à son diamètre réel pour déterminer le trajet du balayage de la zone géographique Z.

Selon encore une autre caractéristique de l'invention, une vitesse du balayage est ajustée pour qu'une durée totale d'éclairement de n'importe quel point à l'intérieur de la zone géographique Z soit supérieure à la durée d'une itération de la séquence de modulation d'intensité du faisceau laser F qui correspond aux données à transmettre.

Les moyens d'orientation 23 peuvent être d'une des technologies déjà connues, telles que par exemple une mise en œuvre appropriée du système de contrôle d'orbite et d'attitude du satellite 2, un miroir de déflexion qui est assemblé sur un cardan à deux axes motorisé et disposé devant le miroir primaire du télescope 22b, ou bien un périscope qui comprend deux miroirs mobiles chacun autour d'un seul axe, montés optiquement en série. Le balayage de la zone Z peut être continu, à vitesse constante ou variable, ou encore sous forme d'une série d'arrêts à des positions qui sont juxtaposées dans la zone géographique Z.

Selon encore une autre caractéristique de l'invention, le récepteur 10 est activé pendant une durée totale de détection qui est supérieure à la durée de la séquence de modulation d'intensité. De cette façon, le détecteur 10 peut recevoir l'intégralité des données qui sont transmises par l'émetteur 20, ou une grande partie de celles-ci.

La partie gauche de la figure 4 montre trois cas possibles de localisation du récepteur de données 10 par rapport au trajet du balayage de la zone géographique Z par le faisceau laser F. A titre d'exemple, le trajet du balayage est en forme de spirale SP progressant vers l'extérieur. B1 et B2 désignent deux passages adjacents et successifs du balayage, le passage B2 suivant le passage B1, et A1, A2 et A3 sont trois positions possibles du récepteur 10 par rapport aux passages de balayage B1 et B2. On suppose en outre, pour cette illustration de mise en œuvre de l'invention, que le pas p de la spirale SP est sensiblement égal ou un peu supérieur à la moitié du diamètre de la tache d'éclairement au sol du faisceau laser F. F1 et F2 désignent deux positions de cette tache d'éclairement, à deux instants des passages B1 et B2. Si le récepteur de données 10 se trouve à la position A1, sur la trace du centre de la tache d'éclairement lors du passage B1, alors le récepteur 10 est éclairé pendant une durée continue au passage B1. Cette durée continue peut être suffisante pour que le récepteur 10 reçoive pendant celle-ci l'intégralité des données qui sont transmises par l'émetteur 20. Mais, si le récepteur 10 se trouve à la position A2, qui est décalée par rapport à la trace du centre de la tache d'éclairement correspondant au passage B1, alors sa durée d'éclairement au passage B1 est plus courte que dans le cas de la position A1, et peut être insuffisante pour que le récepteur reçoive toutes les données au passage B1. Mais le récepteur 10 est de nouveau éclairé lors du passage ultérieur B2, pendant une durée d'éclairement complémentaire qui peut permettre de recevoir les données manquantes lors du passage B1. La position A2 étant plus proche du passage de balayage B1 que du passage de balayage B2, la durée d'éclairement du récepteur 10 au passage B1 est plus longue que celle au passage B2, si bien qu'une partie principale des données sera certainement reçue par le récepteur 10 au passage B1. Cette situation est inversée pour la position A3, qui est plus proche du passage B2 que du passage B1.

La partie droite de la figure 4 illustre les durées de détection du faisceau laser F par le récepteur de données 10 dans les trois cas qui viennent d'être décrits. L'indication «séquence» désigne la séquence complète de modulation de l'intensité du faisceau laser F qui correspond à l'ensemble des données transmises, et qui est répétée continuellement par l'émetteur 20 pendant le balayage, et t désigne le temps représenté selon un axe horizontal. Les rectangles hachurés désignent les durées de détection pour chacune des positions A1, A2 et A3 du récepteur 10 par rapport aux passages de balayage B1 et B2. Comme le montre la figure 4, le début de la détection du faisceau laser F par le récepteur 10 peut intervenir à chaque passage B1 ou B2 à un instant quelconque pendant une itération de la séquence de modulation. Il peut alors être préférable, d'une façon générale pour l'invention, que la durée totale d'éclairement du récepteur 10 lors du balayage, sommée sur tous les passages de balayage qui éclairent le récepteur 10, soit supérieure à deux fois la durée de la séquence complète de modulation de l'intensité du faisceau laser F.

En outre, encore parce que les positions chronologiques relatives du début de la détection du faisceau laser F par le récepteur 10 à chaque passage de balayage et du début d'une itération de la séquence de modulation peuvent être quelconques, il peut être préférable d'encoder les données à transmettre sous forme de paquets au sein de la séquence de modulation de l'intensité du faisceau laser F. En effet, un tel mode d'encodage par paquets permet à la chaîne de décodage 14 du récepteur 10 de remettre dans l'ordre des segments de la séquence de modulation qui ont été reçus selon un ordre inversé. En outre, un encodage sous forme de paquets permet de mettre en œuvre une redondance et une détection d'erreur de transmission. L'encodage de données par paquets étant bien connu de l'Homme du métier, son principe et ses avantages n'ont pas besoin d'être décrits en détail ici. Un tel encodage sous forme de paquets est aussi particulièrement avantageux si la séquence de modulation est longue, par exemple supérieure à 10 secondes.

Pour atteindre le but de réaliser une transmission furtive au sens qui a été précisé dans la partie générale de la description, le procédé de transmission de l'invention est dépourvu de procédures de ralliement et d'acquisition. Il ne nécessite donc pas d'asservir l'orientation de l'émetteur ni celle du récepteur en fonction de leurs positions réciproques, si bien qu'il est particulièrement simple à mettre en œuvre dans la version qui vient d'être décrite.

Dans un perfectionnement de l'invention, le récepteur de données 10 peut être conçu et activé pour transmettre des données de réponse qui sont destinées à l'émetteur 20. Une telle transmission en réponse est postérieure à la réception des données par le récepteur 10 qui a été décrite jusqu'à présent.

Selon une première possibilité, le récepteur 10 et l'émetteur 20 peuvent être pourvus chacun de moyens de communication radio qui permettent au récepteur 10 d'émettre des signaux radio contenant les données de réponse, et à l'émetteur 20 de détecter ces signaux radio.

Selon une seconde possibilité, le récepteur 10 peut être pourvu d'une voie d'émission de signaux optiques, et l'émetteur 20 peut être pourvu d'une voie de réception de signaux optiques qui est compatible avec la voie d'émission du récepteur 10. De cette façon, une transmission optique en champ libre peut être réalisée à partir du récepteur 10 à destination de l'émetteur 20. Une telle transmission peut procéder par modulation d'intensité ou de phase d'un faisceau laser de réponse F' qui est produit par le récepteur 10. De tels modes de communication optique peuvent être mis en œuvre selon des niveaux de perfectionnement variables, qui sont connus de l'Homme du métier. D'une façon générale, l'endroit auquel le faisceau laser F a été focalisé sur le capteur d'image matriciel 12 du récepteur 10 peut permettre de déterminer la direction dans laquelle se trouve l'émetteur 20, par rapport à la position du récepteur 10. Pour cela, une unité d'analyse 15, représentée sur la figure 2, peut être connectée en outre à la sortie du capteur d'image matriciel 12. Sa fonction est de déterminer la direction de l'émetteur 20 à partir de ceux des pixels du capteur 12 sur lesquels le faisceau laser F a été focalisé par l'optique 11. Une chaîne de synthèse du faisceau laser de réponse F', qui regroupe une unité laser, un module d'encodage des données de réponse, et une unité de modulation du faisceau laser de réponse F', est alors ajoutée au récepteur 10. Elle correspond à la référence générale 16 qui est indiquée dans la figure 2. Possiblement, l'optique 11, ou une partie de celle-ci, peut aussi être utilisée pour transmettre le faisceau laser de réponse F', auquel cas cette optique 11 forme avec la chaîne de synthèse 16 du faisceau laser de réponse F' la voie d'émission du récepteur 10 qui a été évoquée dans la partie générale de la présente description. Dans le cas où une partie au moins de l'optique 11 est reprise pour cette voie d'émission, une unité de séparation de voies optiques, pouvant être à base d'une lame semi-réfléchissante 11a par exemple, peut être prévue au sein du récepteur 10. Plusieurs méthodes connues de l'Homme du métier peuvent aussi être mises en œuvre pour diriger le faisceau laser de réponse F' vers l'émetteur 20, conformément à l'information de direction délivrée par l'unité d'analyse 15. L'une de ces méthodes peut notamment consister à disposer en avant de l'optique 11 un miroir qui est mobile selon deux axes. Simultanément, l'émetteur 20 peut comprendre en outre une voie de réception qui est adaptée pour collecter et détecter le faisceau laser de réponse F', et décoder les données de réponse qui sont contenues dans la modulation de celui-ci. Une telle voie de réception peut réutiliser une partie au moins de l'optique 22 et comprendre une chaîne de traitement 28 (figure 3) qui exécute les fonctions de détection du faisceau laser de réponse F' et de décodage de la modulation de celui-ci, afin de délivrer en sortie, au sein du satellite 2, les données de réponse transmises par le récepteur 10. De préférence, un procédé interne au satellite 2 peut être mis en œuvre pour ne pas récupérer ni mémoriser l'information de la direction dans laquelle se trouve le récepteur 10, telle que déterminée par le module d'analyse 15. Une telle précaution permet de maintenir secrète cette information de direction, en évitant qu'elle puisse être interceptée par un adversaire.

Il est entendu que l'invention peut être reproduite en modifiant des aspects secondaires de celle-ci par rapport à la description détaillée qui vient d'être donnée. En particulier, il est rappelé que la possibilité de transmission de données de réponse par le récepteur à l'émetteur, est optionnelle et ne constitue qu'un des perfectionnements possibles de l'invention.

## Revendications

1. Procédé de transmission furtive de données à partir d'un satellite (2) ou d'un aéronef, à destination d'un récepteur (10) qui est situé dans une zone géographique (Z) éloignée du satellite ou aéronef, le procédé comprenant les étapes suivantes qui sont réalisées par un émetteur (20) à bord du satellite ou aéronef :
- encoder les données sous forme d'une séquence de modulation d'intensité qui est destinée à être appliquée à un faisceau laser ; et
- appliquer répétitivement la séquence de modulation d'intensité à un faisceau laser (F) qui est produit à partir du satellite (2) ou aéronef et qui est dirigé à l'intérieur de la zone géographique (Z), en même temps qu'une direction dudit faisceau laser est variée pour produire un balayage automatique de toute la zone géographique par le faisceau laser, en utilisant une vitesse du balayage et une ouverture angulaire du faisceau laser telles qu'un point quelconque de la zone géographique soit éclairé par le faisceau laser lors du balayage pendant une durée totale d'éclairement qui est supérieure à une durée de la séquence de modulation d'intensité ;
et le procédé comprenant les étapes suivantes qui sont réalisées par le récepteur (10) :
- sur un capteur d'image matriciel (12) faisant partie du récepteur (10), recevoir le faisceau laser (F) pendant une durée totale de détection qui est supérieure à la durée de la séquence de modulation d'intensité, et détecter en temps réel la séquence de modulation d'intensité ; et
- décoder la séquence de modulation d'intensité de façon à récupérer les données.

2. Procédé selon la revendication 1, suivant lequel l'ouverture angulaire du faisceau laser (F) est supérieure à 50 µrad, de préférence supérieure à 300 µrad, et inférieure à 2 mrad, et une puissance du faisceau laser, intégrée sur toute une section dudit faisceau laser, est supérieure à 20 W, de préférence supérieure à 50 W.

3. Procédé selon la revendication 1 ou 2, suivant lequel la modulation d'intensité du faisceau laser (F) possède une fréquence de modulation qui est inférieure à 100 kHz, de préférence inférieure à 30 kHz, et supérieure à 1 kHz.

4. Procédé selon l'une quelconque des revendications précédentes, suivant lequel le faisceau laser (F) possède une longueur d'onde égale à 1,55 µm ou égale à 10,6 µm.

5. Procédé selon l'une quelconque des revendications précédentes, suivant lequel le récepteur (10) est embarqué à bord d'un véhicule terrestre, d'un engin agricole, notamment d'un engin agricole mobile, d'un hélicoptère, d'un drone ou d'un bateau, ou est incorporé dans une unité de communication portative.

6. Procédé selon l'une quelconque des revendications précédentes, comprenant en outre les étapes suivantes qui sont réalisées par le récepteur (10) :
- déterminer une direction de réception en fonction d'un endroit sur le capteur d'image matriciel (12) auquel a été focalisé le faisceau laser (F) ; et
- produire un faisceau laser de réponse (F') et transmettre des données de réponse sous forme d'une modulation dudit faisceau laser de réponse, tout en dirigeant ledit faisceau laser de réponse conformément à la direction de réception déterminée,
le procédé comprenant l'étape suivante qui est réalisée à bord du satellite (2) ou aéronef :
- recevoir le faisceau laser de réponse (F') et détecter la modulation dudit faisceau laser de réponse afin de récupérer les données de réponse.

7. Récepteur de données (10), comprenant de façon à former une voie de réception de ce récepteur de données :
- une optique (11), qui est adaptée pour focaliser un rayonnement externe dans un plan focal ;
- un capteur d'image matriciel (12), qui est disposé dans le plan focal ;
- un contrôleur (13), qui est couplé au capteur d'image matriciel (12), de façon à former un ensemble de détection capable de détecter en temps réel une modulation d'intensité du rayonnement externe ; et
- une chaîne de décodage (14), qui est adaptée pour récupérer des données encodées sous la forme d'une modulation d'intensité de rayonnement,
**caractérisé en ce que** la chaîne de décodage (14) est agencée pour recevoir en entrée un signal de détection de modulation d'intensité qui est produit par l'ensemble de détection d'après le rayonnement externe focalisé sur le capteur d'image matriciel (12).

8. Récepteur (10) selon la revendication 7, dans lequel le capteur d'image matriciel (12) et le contrôleur (13) sont adaptés pour détecter la modulation d'intensité du rayonnement externe lorsque ladite modulation possède une fréquence de modulation qui est inférieure à 100 kHz, de préférence inférieure à 30 kHz, et supérieure à 1 kHz.

9. Récepteur (10) selon la revendication 7 ou 8, dans lequel l'optique (11) et le capteur d'image matriciel (12) sont adaptés pour focaliser et détecter le rayonnement externe lorsque qu'une longueur d'onde dudit rayonnement externe est égale à 1,55 µm ou égale à 10,6 µm.

10. Récepteur (10) selon l'une quelconque des revendications 7 à 9, adapté pour être embarqué à bord d'un véhicule terrestre, d'un engin agricole, notamment d'un engin agricole mobile, d'un hélicoptère, d'un drone ou d'un bateau, ou pour être incorporé dans une unité de communication portative.

11. Récepteur (10) selon l'une quelconque des revendications 7 à 10, dans lequel le contrôleur (13) est adapté pour déterminer une zone restreinte à l'intérieur d'une surface photosensible du capteur d'image matriciel (12), dans laquelle zone restreinte est reçue une partie au moins du rayonnement externe pendant une première durée de détection, et le contrôleur est adapté en outre pour restreindre pendant une seconde durée de détection qui suit ladite première durée de détection, une exécution d'opérations de lecture sélectivement à des pixels de ladite zone restreinte, ou à des pixels d'une zone de continuation de détection à l'intérieur de la surface photosensible du capteur d'image matriciel, qui résulte d'un déplacement de ladite zone restreinte.

12. Récepteur (10) selon l'une quelconque des revendications 7 à 11, comprenant en outre :
- une unité d'analyse (15), qui est adaptée pour déterminer une direction de réception en fonction d'un endroit sur le capteur d'image matriciel (12) auquel est focalisé le rayonnement externe ; et
- une voie d'émission, qui est adaptée pour produire un faisceau laser de réponse (F') et pour transmettre des données de réponse sous forme d'une modulation dudit faisceau laser de réponse, pendant que ledit faisceau laser de réponse est dirigé conformément à la direction de réception déterminée par l'unité d'analyse (15).

13. Emetteur de données (20) adapté pour être embarqué à bord d'un satellite (2) ou d'un aéronef, comprenant :
- une unité laser (21), adaptée pour produire un faisceau laser (F) ;
- une optique (22), disposée pour transmettre le faisceau laser (F) vers un récepteur (10) éloigné dudit émetteur (20) ;
- des moyens d'orientation (23), qui sont adaptés pour orienter de façon variable la direction du faisceau laser (F) à l'intérieur d'une zone géographique (Z) ;
- des moyens d'encodage (25), qui sont adaptés pour encoder des données sous forme d'une séquence de modulation d'intensité qui est destinée à être appliquée au faisceau laser (F) ; et
- des moyens de modulation (26), qui sont adaptés pour appliquer répétitivement la séquence de modulation d'intensité au faisceau laser (F) en même temps que la direction dudit faisceau laser est variée par les moyens d'orientation (23) ;
l'émetteur (20) étant **caractérisé en ce que** les moyens d'orientation (23) sont adaptés pour produire un balayage automatique de toute la zone géographique (Z) par le faisceau laser avec une vitesse de balayage, et l'optique (22) est adaptée pour produire le faisceau laser avec une ouverture angulaire, la vitesse de balayage et l'ouverture angulaire étant adaptées de sorte qu'un point quelconque de la zone géographique soit éclairé par le faisceau laser lors du balayage pendant une durée totale d'éclairement qui est supérieure à une durée de la séquence de modulation d'intensité.

14. Emetteur (20) selon la revendication 13, dans lequel l'unité laser (21) et l'optique (22) sont telles que l'ouverture angulaire du faisceau laser (F) soit supérieure à 50 µrad, de préférence supérieure à 300 µrad, et inférieure à 2 mrad, et une puissance dudit faisceau laser, intégrée sur toute une section dudit faisceau laser, soit supérieure à 20 W, de préférence supérieure à 50 W.

15. Emetteur (20) selon la revendication 13 ou 14, dans lequel les moyens de modulation (26) sont adaptés pour moduler l'intensité du faisceau laser (F) selon une fréquence de modulation qui est inférieure à 100 kHz, de préférence inférieure à 30 kHz, et supérieure à 1 kHz.

16. Emetteur (20) selon l'une quelconque des revendications 13 à 15, dans lequel l'unité laser (21) et l'optique (22) sont adaptées pour produire et transmettre le faisceau laser (F) avec une longueur d'onde dudit faisceau laser qui est égale à 1,55 µm ou égale à 10,6 µm.

17. Emetteur (20) selon l'une quelconque des revendications 13 à 16, comprenant en outre une voie de réception adaptée pour recevoir un faisceau laser de réponse (F'), détecter une modulation dudit faisceau laser de réponse et décoder ladite modulation du faisceau laser de réponse afin de récupérer des données de réponse.

## Patentansprüche

1. Verfahren zur Stealth-Übertragung von Daten von einem Satelliten (2) oder einem Flugzeug an einen Empfänger (10), der sich in einem von dem Satelliten oder Flugzeug entfernten geographischen Gebiet (Z) befindet, wobei das Verfahren die folgenden Schritte umfasst, die von einem Sender (20) an Bord des Satelliten oder Flugzeugs durchgeführt werden:
- Codieren der Daten als eine Intensitätsmodulationsfolge, die auf einen Laserstrahl angewendet werden soll, und
- wiederholtes Anwenden der Intensitätsmodulationsfolge auf einen Laserstrahl (F), der von dem Satelliten (2) oder Flugzeug erzeugt wird und der in das geographische Gebiet (Z) gerichtet ist, während gleichzeitig eine Richtung des Laserstrahls variiert wird, um eine automatische Abtastung des gesamten geographischen Gebiets durch den Laserstrahl zu erzeugen, mit einer Abtastgeschwindigkeit und einer Winkelöffnung des Laserstrahls, bei der ein beliebiger Punkt in dem geographischen Gebiet beim Abtasten durch den Laserstrahl während einer Gesamtbeleuchtungsdauer beleuchtet wird, die länger als eine Dauer der Intensitätsmodulationsfolge ist,
und wobei das Verfahren die folgenden Schritte umfasst, die von dem Empfänger (10) durchgeführt werden:
- Empfangen des Laserstrahls (F) auf einem Matrixbildsensor (12), der einen Teil des Empfängers (10) bildet, für eine Gesamterfassungszeit, die größer als die Dauer der Intensitätsmodulationsfolge ist, und Erfassen der Intensitätsmodulationsfolge in Echtzeit, und
- Decodieren der Intensitätsmodulationsfolge, um die Daten wiederherzustellen.

2. Verfahren nach Anspruch 1, wobei die Winkelöffnung des Laserstrahls (F) größer als 50 µrad, vorzugsweise größer als 300 µrad, und kleiner als 2 mrad ist und eine über einen gesamten Querschnitt des Laserstrahls integrierte Laserstrahlleistung größer als 20 W, vorzugsweise größer als 50 W, ist.

3. Verfahren nach Anspruch 1 oder 2, wobei die Intensitätsmodulation des Laserstrahls (F) eine Modulationsfrequenz aufweist, die kleiner als 100 kHz, vorzugsweise kleiner als 30 kHz, und größer als 1 kHz ist.

4. Verfahren nach einem der vorhergehenden Ansprüche, wobei der Laserstrahl (F) eine Wellenlänge von 1,55 µm oder 10,6 µm aufweist.

5. Verfahren nach einem der vorhergehenden Ansprüche, wobei der Empfänger (10) an Bord eines Landfahrzeugs, einer landwirtschaftlichen Maschine, insbesondere einer mobilen landwirtschaftlichen Maschine, eines Hubschraubers, einer Drohne oder eines Bootes mitgeführt oder in eine tragbare Kommunikationseinheit eingebaut wird.

6. Verfahren nach einem der vorhergehenden Ansprüche, das ferner die folgenden Schritte umfasst, die vom Empfänger (10) durchgeführt werden:
- Bestimmen einer Empfangsrichtung abhängig von einer Stelle auf dem Matrixbildsensor (12), auf die der Laserstrahl (F) fokussiert wurde, und
- Erzeugen eines Antwortlaserstrahls (F') und Übertragen von Antwortdaten in Form einer Modulation des Antwortlaserstrahls, während der Antwortlaserstrahl in Übereinstimmung mit der bestimmten Empfangsrichtung gelenkt wird,
wobei das Verfahren den folgenden Schritt umfasst, der an Bord des Satelliten (2) oder des Flugzeugs durchgeführt wird:
- Empfangen des Antwortlaserstrahls (F') und Erfassen der Modulation des Antwortlaserstrahls, um die Antwortdaten wiederherzustellen.

7. Datenempfänger (10), umfassend, um einen Empfangskanal des Datenempfängers zu bilden:
- eine Optik (11), die geeignet ist, externe Strahlung in einer Brennebene zu fokussieren;
- einen Matrixbildsensor (12), der in der Brennebene angeordnet ist;
- einen Controller (13), der mit dem Matrixbildsensor (12) gekoppelt ist, um eine Detektionsanordnung zu bilden, die in der Lage ist, in Echtzeit eine Intensitätsmodulation der externen Strahlung zu detektieren, und
- eine Decodierkette (14), die dazu ausgelegt ist, Daten wiederherzustellen, die in Form einer Strahlungsintensitätsmodulation codiert sind,
**dadurch gekennzeichnet, dass** die Decodierkette (14) so angeordnet ist, dass sie als Eingang ein Intensitätsmodulations-Detektionssignal empfängt, das von der Detektionsanordnung entsprechend der auf den Matrixbildsensor (12) fokussierten externen Strahlung erzeugt wird.

8. Empfänger (10) nach Anspruch 7, wobei der Matrixbildsensor (12) und der Controller (13) so ausgelegt sind, dass sie die Intensitätsmodulation externer Strahlung erfassen, wenn die Modulation eine Modulationsfrequenz aufweist, die kleiner als 100 kHz, vorzugsweise kleiner als 30 kHz, und größer als 1 kHz ist.

9. Empfänger (10) nach Anspruch 7 oder 8, wobei die Optik (11) und der Matrixbildsensor (12) so ausgelegt sind, dass sie die externe Strahlung fokussieren und erfassen, wenn die externe Strahlung eine Wellenlänge von 1,55 µm oder 10,6 µm aufweist.

10. Empfänger (10) nach einem der Ansprüche 7 bis 9, der dazu ausgelegt ist, an Bord eines Landfahrzeugs, einer landwirtschaftlichen Maschine, insbesondere einer mobilen landwirtschaftlichen Maschine, eines Hubschraubers, einer Drohne oder eines Bootes mitgeführt oder in eine tragbare Kommunikationseinheit eingebaut zu werden.

11. Empfänger (10) nach einem der Ansprüche 7 bis 10, wobei der Controller (13) dazu ausgelegt ist, einen begrenzten Bereich innerhalb einer lichtempfindlichen Oberfläche des Matrixbildsensors (12) zu bestimmen, in dem zumindest ein Teil der externen Strahlung während einer ersten Erfassungsdauer empfangen wird, und der Controller ferner dazu ausgelegt ist, während einer zweiten, auf die erste Erfassungsdauer folgenden Erfassungsdauer die Ausführung von Leseoperationen wahlweise auf Pixel des begrenzten Bereichs oder auf Pixel eines Erfassungsfortsetzungsbereichs innerhalb der lichtempfindlichen Oberfläche des Matrixbildsensors, der sich aus einer Verschiebung des begrenzten Bereichs ergibt, zu beschränken.

12. Empfänger (10) nach einem der Ansprüche 7 bis 11, ferner umfassend:
- eine Auswerteeinheit (15), die dazu ausgelegt ist, eine Empfangsrichtung abhängig von einer Stelle auf dem Matrixbildsensor (12) zu bestimmen, auf welche die externe Strahlung fokussiert wird, und
- einen Sendekanal, der dazu ausgelegt ist, einen Antwortlaserstrahl (F') zu erzeugen und Antwortdaten in Form einer Modulation des Antwortlaserstrahls zu übertragen, während der Antwortlaserstrahl entsprechend der von der Analyseeinheit (15) bestimmten Empfangsrichtung gerichtet wird.

13. Datensender (20), der dazu ausgelegt ist, an Bord eines Satelliten (2) oder eines Flugzeugs mitgeführt zu werden, umfassend:
- eine Lasereinheit (21), die zur Erzeugung eines Laserstrahls (F) ausgelegt ist;
- eine Optik (22), die so angeordnet ist, dass sie den Laserstrahl (F) an einen von dem Sender (20) entfernten Empfänger (10) sendet;
- Lenkmittel (23), die dazu ausgelegt sind, die Richtung des Laserstrahls (F) innerhalb eines geographischen Gebiets (Z) variabel zu lenken;
- Codiermittel (25), die dazu ausgelegt sind, Daten als eine auf den Laserstrahl (F) anzuwendende Intensitätsmodulationsfolge zu codieren, und
- Modulationsmittel (26), die so ausgelegt sind, dass sie die Intensitätsmodulationsfolge wiederholt auf den Laserstrahl (F) anwenden, während gleichzeitig die Richtung des Laserstrahls durch die Lenkmittel (23) variiert wird;
wobei der Sender (20) **dadurch gekennzeichnet ist, dass** die Lenkmittel (23) dazu ausgelegt sind, eine automatische Abtastung des gesamten geographischen Gebiets (Z) durch den Laserstrahl mit einer Abtastgeschwindigkeit zu erzeugen, und die Optik (22) dazu ausgelegt ist, den Laserstrahl mit einer Winkelöffnung zu erzeugen, wobei die Abtastgeschwindigkeit und die Winkelöffnung so ausgelegt sind, dass ein beliebiger Punkt des geographischen Gebiets während der Abtastung durch den Laserstrahl für eine Gesamtbeleuchtungsdauer, die größer als eine Dauer der Intensitätsmodulationsfolge ist, beleuchtet wird.

14. Sender (20) nach Anspruch 13, wobei die Lasereinheit (21) und die Optik (22) so beschaffen sind, dass die Winkelöffnung des Laserstrahls (F) größer als 50 µrad, vorzugsweise größer als 300 µrad, und kleiner als 2 mrad ist, und eine Leistung des Laserstrahls, die über einen gesamten Querschnitt des Laserstrahls integriert ist, größer als 20 W, vorzugsweise größer als 50 W, ist.

15. Sender (20) nach Anspruch 13 oder 14, wobei die Modulationsmittel (26) dazu ausgelegt sind, die Intensität des Laserstrahls (F) mit einer Modulationsfrequenz zu modulieren, die kleiner als 100 kHz, vorzugsweise kleiner als 30 kHz, und größer als 1 kHz ist.

16. Sender (20) nach einem der Ansprüche 13 bis 15, wobei die Lasereinheit (21) und die Optik (22) dazu ausgelegt sind, den Laserstrahl (F) mit einer Wellenlänge des Laserstrahls von 1,55 µm oder 10,6 µm zu erzeugen und zu senden.

17. Sender (20) nach einem der Ansprüche 13 bis 16, ferner mit einem Empfangskanal, der dazu ausgelegt ist, einen Antwortlaserstrahl (F') zu empfangen, eine Modulation des Antwortlaserstrahls zu erfassen und die Modulation des Antwortlaserstrahls zu decodieren, um Antwortdaten wiederherzustellen.

## Claims

1. Method for stealth transmission of data from a satellite (2) or an aircraft to a receiver (10) that is located in a geographical zone (Z) remote from the satellite or aircraft, the method comprising the following steps, which are carried out by a transmitter (20) on board the satellite or aircraft:
- encoding the data in a form of an intensity modulation sequence that is intended to be applied to a laser beam; and
- repeatedly applying the intensity modulation sequence to a laser beam (F) that is produced from the satellite (2) or aircraft and that is directed towards the interior of the geographical zone (Z), at the same time as a direction of said laser beam is varied so that the laser beam automatically scans the entire geographical zone, using a scanning speed and an aperture angle of the laser beam such that any point in the geographical zone is illuminated by the laser beam when scanning for a total illumination time that is greater than a duration of the intensity modulation sequence; and the method comprising the following steps, which are carried out by the receiver (10):
- on a matrix image sensor (12) forming part of the receiver (10), receiving the laser beam (F) for a total detection time that is greater than the duration of the intensity modulation sequence, and detecting the intensity modulation sequence in real time; and
- decoding the intensity modulation sequence in order to retrieve the data.

2. Method according to claim 1, wherein the aperture angle of the laser beam (F) is greater than 50 µrad, preferably greater than 300 µrad, and less than 2 mrad, and a power of the laser beam, integrated over an entire section of said laser beam, is greater than 20 W, preferably greater than 50 W.

3. Method according to claim 1 or 2, wherein the intensity modulation of the laser beam (F) has a modulation frequency of less than 100 kHz, preferably less than 30 kHz, and greater than 1 kHz.

4. Method according to any one of the preceding claims, wherein the laser beam (F) has a wavelength that is equal to 1.55 µm or equal to 10.6 µm.

5. Method according to any one of the preceding claims, wherein the receiver (10) is on-board a ground vehicle, agricultural machinery, in particular moving agricultural machinery, a helicopter, a drone or a ship, or is incorporated into a portable communication unit.

6. Method according to any one of the preceding claims, further comprising the following steps, which are carried out by the receiver (10):
- determining a reception direction as a function of a location on the matrix image sensor (12) at which the laser beam (F) was focused; and
- producing a response laser beam (F') and transmitting response data in a form of a modulation of said response laser beam, while directing said response laser beam in accordance with the determined reception direction,
the method comprising the following step, which is carried out on board the satellite (2) or aircraft:
- receiving the response laser beam (F') and detecting the modulation of said response laser beam in order to retrieve the response data.

7. Data receiver (10) comprising, in order to form a receive path for this data receiver:
- an optical system (11), which is adapted to focus external radiation in a focal plane;
- a matrix image sensor (12), which is disposed in the focal plane;
- a controller (13), which is coupled to the matrix image sensor (12), so as to form a detection assembly capable of detecting an intensity modulation of the external radiation in real time; and
- a decoding system (14), which is adapted to retrieve data encoded in the form of a radiation intensity modulation,
**characterised in that** the decoding system (14) is arranged to receive at input an intensity modulation detection signal which is produced by the detection assembly based on the external radiation focused on the matrix image sensor (12).

8. Receiver (10) according to claim 7, wherein the matrix image sensor (12) and the controller (13) are adapted to detect the intensity modulation of the external radiation when said modulation has a modulation frequency of less than 100 kHz, preferably less than 30 kHz, and greater than 1 kHz.

9. Receiver (10) according to claim 7 or 8, wherein the optical system (11) and the matrix image sensor (12) are adapted to focus and detect the external radiation when a wavelength of said external radiation is equal to 1.55 µm or equal to 10.6 µm.

10. Receiver (10) according to any one of claims 7 to 9, adapted to be placed on-board a ground vehicle, agricultural machinery, in particular moving agricultural machinery, a helicopter, a drone or a ship, or to be incorporated into a portable communication unit.

11. Receiver (10) according to any one of claims 7 to 10, wherein the controller (13) is adapted to determine a restricted zone in a photosensitive surface of the matrix image sensor (12), in which restricted zone at least part of the external radiation is received during a first detection time, and the controller is further adapted to restrict, during a second detection time that follows said first detection time, performance of read operations selectively to pixels of said restricted zone, or to pixels of a detection continuation zone in the photosensitive zone of the matrix image sensor, which results from a displacement of said restricted zone.

12. Receiver (10) according to any one of claims 7 to 11, further comprising:
- an analysis unit (15), which is adapted to determine a reception direction as a function of a location on the matrix image sensor (12) at which the external radiation is focused; and
- a transmission path, which is adapted to produce a response laser beam (F') and to transmit response data in a form of a modulation of said response laser beam, while said response laser beam is directed in accordance with the reception direction determined by the analysis unit (15).

13. Data transmitter (20) adapted to be placed on board a satellite (2) or an aircraft, comprising:
- a laser unit (21) adapted to produce a laser beam (F);
- an optical system (22), disposed to transmit the laser beam (F) towards a receiver (10) that is remote from said transmitter (20);
- orientation means (23), which are adapted to orient the direction of the laser beam (F) in a variable manner within a geographical zone (Z);
- encoding means (25), which are adapted to encode data in a form of an intensity modulation sequence that is intended to be applied to the laser beam (F); and
- modulation means (26), which are adapted to repeatedly apply the intensity modulation sequence to the laser beam (F) at the same time as the direction of said laser beam is varied by the orientation means (23);
the transmitter (20) being **characterised in that** the orientation means (23) are adapted so that the laser beam automatically scans the entire geographical zone (Z) at a scanning speed, and the optical system (22) is adapted to produce the laser beam with an aperture angle, the scanning speed and the aperture angle being adapted so that any point in the geographical zone is illuminated by the laser beam when scanning for a total illumination time that is greater than a duration of the intensity modulation sequence.

14. Transmitter (20) according to claim 13, wherein the laser unit (21) and the optical system (22) are such that the aperture angle of the laser beam (F) is greater than 50 µrad, preferably greater than 300 µrad, and less than 2 mrad, and a power of said laser beam, integrated over an entire section of said laser beam, is greater than 20 W, preferably greater than 50 W.

15. Transmitter (20) according to claim 13 or 14, wherein the modulation means (26) are adapted to modulate the intensity of the laser beam (F) according to a modulation frequency of less than 100 kHz, preferably less than 30 kHz, and greater than 1 kHz.

16. Transmitter (20) according to any one of claims 13 to 15, wherein the laser unit (21) and the optical system (22) are adapted to produce and transmit the laser beam (F) with a wavelength of said laser beam that is equal to 1.55 µm or equal to 10.6 µm.

17. Transmitter (20) according to any one of claims 13 to 16, further comprising a receive path adapted to receive a response laser beam (F), detect a modulation of said response laser beam, and decode said modulation of the response laser beam in order to retrieve response data.
